(19) Europäisches Patentamt
European Patent Office
Office européen des brevets

(11) **EP 2 413 707 B1**

(12) **EUROPEAN PATENT SPECIFICATION**

(45) Date of publication and mention
of the grant of the patent:
**03.06.2015 Bulletin 2015/23**

(51) Int Cl.:
*A23F 5/32* *(2006.01)*   *A23F 5/36* *(2006.01)*
*A23F 5/38* *(2006.01)*   *A23L 2/395* *(2006.01)*
*A23P 1/06* *(2006.01)*

(21) Application number: **10709240.5**

(22) Date of filing: **22.03.2010**

(86) International application number:
**PCT/EP2010/053677**

(87) International publication number:
**WO 2010/115697 (14.10.2010 Gazette 2010/41)**

(54) **INSTANT BEVERAGE PRODUCT**

INSTANTGETRÄNKPRODUKT

PRODUIT DE BOISSON INSTANTANÉE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **01.04.2009 US 165731 P**

(43) Date of publication of application:
**08.02.2012 Bulletin 2012/06**

(73) Proprietor: **Nestec S.A.**
**1800 Vevey (CH)**

(72) Inventors:
• **BOEHM, Robert Thomas**
**Marysville**
**OH 43040 (US)**
• **DONHOWE, Daniel Paul**
**Dublin**
**OH 43016 (US)**
• **FU, Xiaoping**
**Dublin**
**OH 43016 (US)**
• **PAGIDALA, Jaya Bharath Reddy**
**Dublin**
**OH 43016 (US)**
• **SUDHARSAN, Mathalai Balan**
**CH-1004 Lausanne (CH)**

(74) Representative: **Lomholt, Stig Bredsted et al**
**Nestec S.A.**
**CT-IAM**
**Avenue Nestlé 55**
**1800 Vevey (CH)**

(56) References cited:
**EP-A- 1 627 568**   **WO-A-98/31237**
**WO-A-2009/040249**   **WO-A-2009/059938**
**US-A- 4 351 849**

## Description

## Field of the invention

The present invention relates to a method for the production of instant coffee product which, upon reconstitution with liquid, form a foamy upper surface. The method makes use of a porous base powder.

## Background of the invention

In general, instant beverages are used to describe products such as tea, coffee, chocolate or the like which are sold in a form that is easily reconstitutable with water to form a drink. Such beverages are typically in solid form and are readily soluble in hot water.

Instant soluble coffee is a phrase used to describe coffee which has been prepared by extraction of roast and ground coffee followed typically by reconstitution of the extract into a powdered product by conventional means such as freeze-drying, spray-drying or the like.

In order to prepare a beverage, hot water is then simply added to the powder thus avoiding the complicated and time-consuming process which is involved when preparing a beverage from traditional roast and ground coffee.

However, unlike coffee beverages prepared from roast and ground coffee, those prepared from instant soluble coffee do not usually exhibit a fine foam on their upper surface when reconstituted with hot water.

The foamed upper surface in beverages prepared from roast and ground coffee are typically associated with and caused, at least in part, by the machines which brew with pressurised water and/or steam.

This foam is known to positively affect the mouthfeel of the product when consumed and so is highly desired by many consumers. Furthermore, the foam acts to keep more of the volatile aromas within the beverage so that they can be appreciated by the consumer rather than lost to the surrounding environment.

Nevertheless, instant beverages such as instant soluble coffee are not suited for use with roast and ground coffee brewing apparatus and so the solution for foaming the beverage derived from roast and ground coffee is not readily applicable to instant beverages.

Instead, the foam must be generated by simple admixing of the instant beverage product and a liquid.

US-A-6,713,113 discloses a powdered soluble foaming ingredient which has a matrix containing a carbohydrate, a protein and entrapped pressurized gas. The gas is released upon addition of the dry powder to liquid.

US-A-4,830,869 and US-A-4,903,585, both to Wimmers, et al. disclose a method for making a coffee beverage having a thick layer of foamed coffee on its surface, similar in appearance to cappuccino coffee. A measured amount of spray-dried instant coffee and a small amount of cold water are combined with vigorous agitation to form a foamed coffee concentrate. Then, hot water is added to make a coffee beverage.

US-A-4,618,500 to Forquer discloses a method for preparing a brewed espresso-type coffee beverage which has froth on the surface of the beverage. Steam is injected into the brewed coffee beverage to produce the froth.

US-A-3,749,378 to Rhodes discloses an apparatus for foaming a coffee extract. Gas is introduced into the coffee extract and the foamed coffee is then spray-dried to make a soluble coffee product having a low bulk density.

A similar process is described in EP 0 839 457 B1 to Kraft Foods, whereby the soluble coffee powder is foamed by gas injection. The gas bubbles size is then reduced such that the final product will have gas bubbles of less than 10 micrometres.

EP 1 627 568 discloses a powdered foaming ingredient produced by heating a porous powder under pressure.

Many instant foamed beverages are still lacking insofar as the foam initially produced is not conserved during consumption or the structure resembles a coarse foam rather than a fine and smooth (velvety) foam, ultimately desired by consumers. Alternatively or additionally, there may simply be insufficient foam produced.

It has now been found that powders with a certain microstructure enable the production of an instant beverage product which provides excellent foam and dissolution upon reconstitution in a liquid.

It has also been found that a process to produce a precursor with a certain microstructure and agglomeration of said precursor under specific conditions enables the production of an instant beverage product which provides excellent foam upon reconstitution with water.

Agglomeration of food products by sintering is known. For instance, US-A-6,497,911 to Niro, refers to a process of preparing a water soluble coffee or tea product using a non-rewetted particulate material obtained from an extract by drying. During the process, external compaction of the product is required resulting in a product which suffers from structural collapse of the internal pores.

US-A-5,089,279 to Conopco relates to a sintering process which is performed in a closed container so as not to lose humidity during sintering. This is suitable for confectionary, for instance, as it results in a sintered mass.

US-A-4,394,395 to Nestlé describes a process for manufacturing a food product where a powder is filled into moulds, lightly compressed and then heated to sinter the powder. This results in a moulded food product.

US 3,592,659 to General Foods Corporation describes a method of agglomerating frozen particles which can be used in the manufacture of instant coffee. Reconstitution of these agglomerates is however said to generate less foam than standard spray-dried coffee.

US 3,573,060 to Hills Bros. Coffee relates to a freeze-dried coffee extract which is highly porous and is produced by shock-freezing coffee extract droplets and then freeze-drying them.

DE 19750679 to Windhab et al. relates to water/oil or water/oil/water emulsions which are spray frozen and sintered in order to improve their storage at low temperature.

A process for spray-freezing liquid products such as milk, coffee, fruit juices is also described in US 3,670,520 to Bonteil et al.

A drying process whereby liquid substances such as fruit juice, pharmaceuticals, nutraceuticals, tea and coffee are spray freeze-dried is also described in WO2005/105253 to Agresearch Limited.

However, the above disclosures do not give a product having the desired characteristics required for foaming upon reconstitution with water.

Furthermore, agglomeration using a sintering process is known to cause the partial or complete collapse of the microstructure (pores) in the product within which gas would be held. This problem needs to be addressed in order to provide a beverage having a desirable foamed upper surface.

Therefore, the present invention thus seeks to provide a coffee product, which upon reconstitution yields a coffee beverage with a desirable foamed upper surface.

**Summary of the invention**

Accordingly the present invention relates to a method for the preparation of an instant coffee powder comprising the steps of: a) providing a porous spray-frozen powder having a particle porosity of at least 35%, an ice crystal pore volume of less than 2.5mL/g, and an ice crystal pore size of less than 3 micrometres, and b) sintering a layer of the base powder at a temperature below 0°C while gas is forced through the layer, to form a sintered cake, and c) freeze-drying the sintered powder to provide said instant beverage product.

**Brief description of the figures**

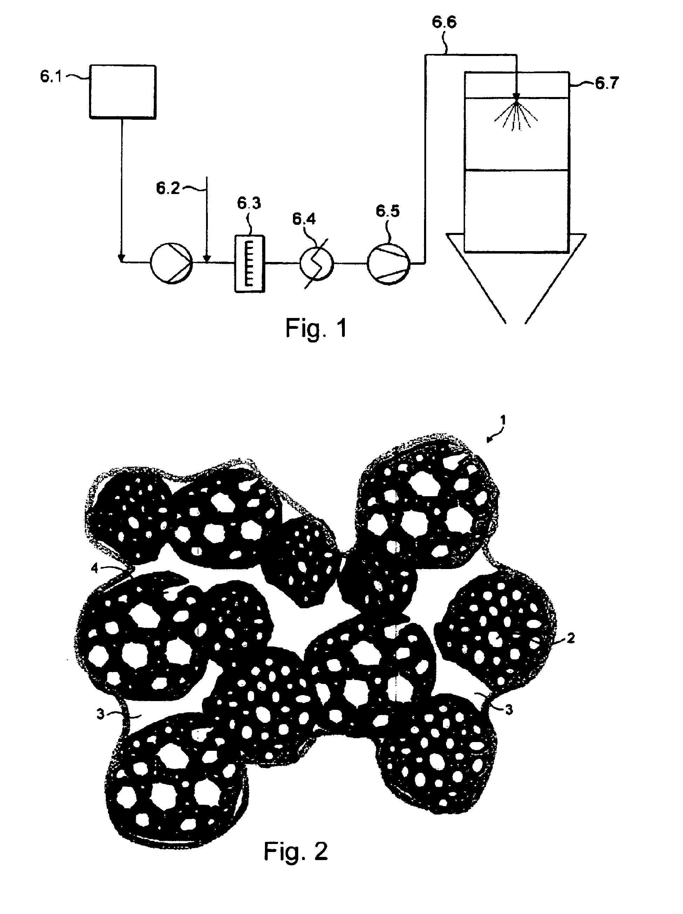

- Fig. 1 is a representation of a process for the production of spray-frozen particles according to the present invention, wherein 6.1 is typically a coffee liquor, 6.2 represents gas injection, 6.3 is mixing device, 6.4 is a heat exchanger, 6.5 is a pump, 6.6 shows the transport of the foamed liquor prior to spraying and 6.7 shows the spray freezing chamber.

- Fig. 2 is a schematic representation of a granule according to the present invention, which shows the granule (1) comprising closed pores (2), open pores with an opening diameter greater than 2 micrometres (3) and open pores with an opening diameter less than 2 micrometres (4).

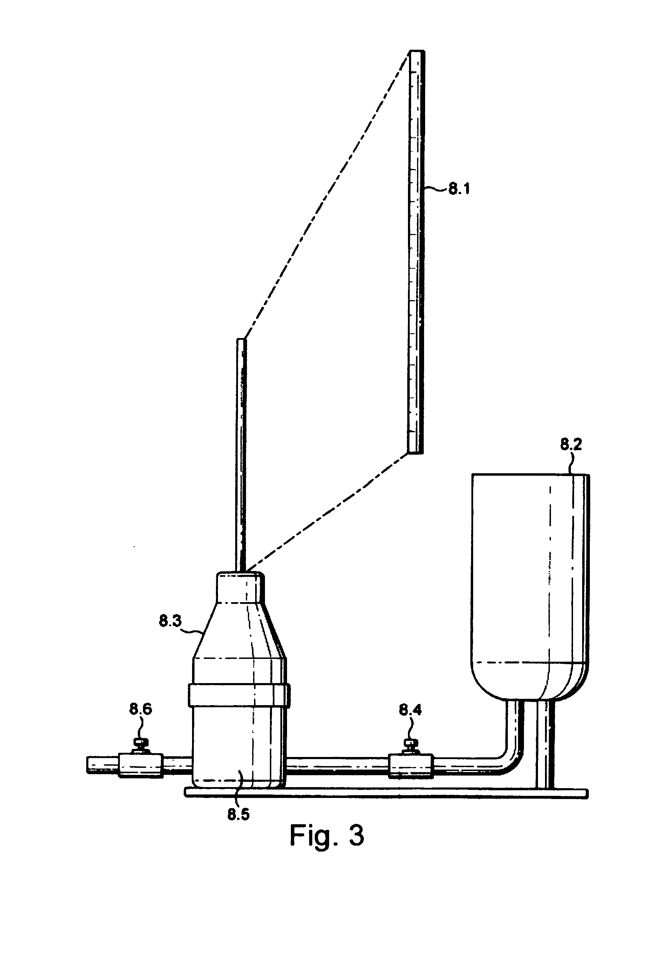

- Fig. 3 is a description of the equipment used to measure the crema volume of the samples, wherein (8.1) is a plastic scale for reading the foam volume, (8.2) is a water reservoir, (8.3) is the lid of the reconstitution vessel, (8.4) is a connection valve, (8.5) is the reconstitution vessel and (8.6) is the release valve.

**Detailed description of the invention**

The present invention relates to the manufacture of instant coffee products.

The present invention relates to instant coffee products which deliver an excellent foamed upper surface (also called "crema") upon reconstitution with a liquid which confers to the product advantageous organoleptic properties.

The instant coffee product is in the form of a powder, e.g. in the form of granules. In the following the term "granule" is used to describe a powder which may be obtainable by agglomeration of smaller powder particles. The granules thus comprise smaller constitutive powder particles. These smaller constitutive powder particles may be partially fused to form the bigger granules.

Thus, the present invention relates to a method for the manufacture of instant coffee products which comprises, in a first step, the provision of a porous base powder. The porous base powder is a spray-frozen powder.

Spray-freezing is a technology which has been known for many years. It consists in spraying a liquid into droplets and simultaneously freezing said droplets.

In the present invention, the spray-freezing may be carried out according to a process schematised in Fig. 1. The liquid to be spray-frozen may be any suitable liquid for forming a coffee powder, preferably it is a coffee extract (6.1). The coffee extract preferably comprises a solids content above 40%, more preferably above 50%. The coffee extract is firstly subjected to the addition of a gas (6.2), preferably nitrogen, by the means of a sparging device distributing the nitrogen homogeneously. The gas may be added before or after the high pressure pump. Preferably, a mixing device (6.3) is used in order to ensure a homogeneous dispersion of the gas bubbles. In a preferred embodiment, a heat exchanger (6.4) is used in order to cool the foamed extract after gas injection. The temperature of the extract should be brought to between 0 and 60°C, preferably between 0 to 30°C, such as between 10 and 25°C or between 15 and 30°C. The foamed extract then enters a high pressure pump (6.5) or homogeniser. Thus, the pressure of the extract may be increased to 65 to 400 bar, preferably 85 to 350 bar. The foamed extract (6.6) is then pumped to the top of a spray-freezing tower (6.7), where the extract is atomised. It has been found that when the pressure drop through the atomisation nozzle is high, between 150 and 350 bar, preferably between 150 and 240 bar, more preferably between 175 and 205 bar, gas under pressure may be enclosed in the spray frozen powder. The spray-freezing process may be carried out by means of direct or indirect contact with cryogenic fluids such as liquid nitrogen, cold air, and liquid carbon dioxide.

This process results in a porous spray-frozen powder which can be used as a basis for the manufacture of instant coffee granules according to the present invention.

The porous spray-frozen powder of the present invention comprises a particle porosity of at least 35%, an ice crystal pore volume of less than 2.5mL/g, preferably less than 2.0 mL/g, and an ice crystal pore size of less than 3 micrometres, preferably between 0.1 and 3 micrometres. Preferably, the particle porosity is between 35% and 85%, more preferably between 45% and 70%.

Porosity of the particles may be determined by techniques known to the skilled person such as mercury porosimetry, etc. Similarly ice crystal pore volume and ice crystal pore size may be measured by mercury porosimetry and SEM.

Preferably, the spray-frozen powder comprises an average pore size diameter $D_{50}$ of less than 40 micrometres, preferably less than 25 micrometres.

The pore size distribution of the spray-frozen powder of the invention may be characterised by a distribution span factor preferably of less than 4, more preferably less than 3, even more preferably less than 2, most preferably less than 1. The distribution span factor is obtained by X-ray tomography. The span of the distribution is calculated by the following equation:

$$\text{Span} = \frac{D_{90} - D_{10}}{D_{50}}$$

wherein $D_{90}$, $D_{10}$ and $D_{50}$ represent the equivalent pore size which 90%, 10% and 50%, respectively, of the pores has a size lower or equal to. The pore size distribution is based on the void volume distribution. Thus, the lower the span factor, the more narrow and homogeneous the distribution of the pores.

The porous spray-frozen powder of the invention is further characterised by a tapped density preferably between 150-650g/L. The porous spray-frozen base powder preferable has a particle size ($D_{50}$) between 50 and 300 micrometres, more preferably between 100 and 200 micrometres.

In one embodiment the spray frozen base powder comprises enclosed gas under pressure. The enclosed gas is preferably under a pressure of at least 2 bar, such as at least 3 bar, or between 3 and 6 bar. The spray frozen powder preferably comprises at least 0.5 ml of enclosed gas per g of powder, such as at least 1, or between 1 and 2 ml enclosed gas per g of powder.

The porous base powder is used in a further sintering step according to the method of the present invention. Sintering is carried out at a temperature below 0°C to form a sintered cake.

According to an embodiment, the porous base powder, which is spray-frozen, is maintained at a temperature below 0°C prior to sintering. Preferably, it is maintained at a temperature below -15°C, more preferably below -30°C. Sintering may be performed by any suitable method known in the art. In one embodiment, a layer of the base powder is formed on a porous conveyer belt which passes through a sintering zone. Ideally, the base powder is conveyed in a continuous fashion into a feeder/distributor from which it is distributed as a layer onto the conveyer belt. The conveyer belt thus transports a layer of base powder particles loosely packed together. The layer may preferably be of a thickness of between 5 and 20 mm. Preferably, no compaction of the layer is carried out prior to sintering. The layer may be continuous, or it may be distributed in individual portions, e.g. held in moulds or recessions in the belt, if tablets, shaped objects, or the like is desired.

Gas, typically air, is forced through the layer of base powder; the air velocity is preferably above 0.01 m/s, such as above 0.5 m/s, above 1 m/s or between 0.5 and 5 m/s. The air may be forced through the layer by any suitable method, e.g. by suction. The sintering may be achieved by heating the powder layer by the gas flowing through it, or it may be heated by any other suitable means such as e.g. by infrared or microwave radiation, conduction, or a combination of several heating means. In one embodiment, the gas temperature is higher than the temperature of the powder layer entering the sintering zone, the gas temperature may e.g. be between -25 and -5°C, preferably between -20 and -10°C. The residence time in the sintering zone is preferably less than 10 minutes, such as e.g. less than 5 minutes. In one embodiment the residence time in the sintering zone is between 20 and 200 seconds. It has been found that under these sintering conditions the internal microstructure of the porous base powder and any gas enclosed under pressure therein is best preserved.

It is preferable to control the sintering to the point at which the particles are sufficiently fused together to maintain a strong enough product texture, but not over-sintered at which point the internal microstructure collapses and the gas volume (responsible for crema formation) is lost. As the particles fuse together and collapse, the volume of the interparticle voids in the final product (i.e. the void space between individual base powder particles) begins to decrease and gas enclosed under pressure may be lost, which inhibits foam formation and dissolution in the final product.

After sintering, the sintered cake may be passed through a cooling zone. The cooling zone is at a temperature below the sintering zone temperature. Typically the cooling zone is at a temperature below -10°C, preferably below -20°C, more preferably below -30°C.

The sintered cake may be grinded to form granules, typically having a size greater than 0.5mm, preferably less than 4mm.

After grinding, the granules may be further dried, e.g. by vacuum drying or freeze-drying using standard methods. The final moisture content of the granules is typically 2-8%, such as 3-4%.

In an embodiment of the invention, all steps of the method may be carried out in a cold room environment at below 0°C, preferably below -15°C, more preferably below -30°C.

Final instant coffee granules may resemble a typical freeze-dried coffee texture. However, upon reconstitution in liquid, typically hot water, the present products exhibit an improved crema volume. For instance, 5g of the present granules reconstituted in 200mL of water may provide a crema volume of at least 3mL. The amount of crema produced can be measured with a simple device (Figure 3) consisting of a reconstitution vessel connected to a water reservoir, which is initially blocked off with a valve. After reconstituting, the reconstitution vessel is closed with a special lid that ends in a scaled capillary. The valve between the reconstitution vessel and the water reservoir is then opened and the water (standard tap water of any temperature) pushes the reconstituted beverage upwards into the capillary, thus facilitating the reading of the crema volume.

In one embodiment of the invention, the porous base powder to be sintered comprises gas under pressure. Due to the sintering conditions applied, the enclosed gas is completely or partly retained under pressure during the sintering, and the resulting sintered product comprises gas under pressure. The enclosed gas is preferably under a pressure of at least 1 bar, such as at least 1.5 bar, or between 1 and 6 bar. The sintered product preferably comprises at least 0.3 ml of enclosed gas per g of powder, such as at least 0.5 ml, or between 0.3 and 2 ml enclosed gas per g of powder.

The instant beverage product which may be obtained by the present method is a coffee product. The instant coffee product may be mixed with any other ingredient suitable for inclusion into a beverage, e.g. a coffee powder of the invention may be mixed with a creamer and/or a sweetener to produce a coffee mix suitable for preparing e.g. café latte, cappuccino or the like.

Referring to figure 2, it can be seen that the product of the present invention (1) comprise closed pores (2), open pores with an opening diameter of less than 2 micrometres (4) and open pores with an opening greater than 2 micrometres (3). Furthermore, the product of the present invention also comprises ice sublimation voids which are the result of freeze-drying a cold sintered cake.

Upon reconstitution in a liquid, the product of the invention produces foam. The products of the invention may thus be further defined by their foaming porosity. Foaming porosity is a measure of the porosity which contributes to foaming and characterises the potential foaming ability of the product of the invention. Indeed, open pores (3) will not contribute to the foaming as much, or even in some cases not at all compared to closed pores (2). Pores with opening diameter of less than 2 micrometres (4) may also contribute to foam since the capillary pressure in these pores is greater than the ambient pressure and this may enable foam formation. In the present invention, the foaming porosity is obtained by including closed pores (2) and open pores having an opening diameter of less than 2 micrometres (4).

Thus, for the purpose of measuring the foaming porosity, only closed pores (2) as well as open pores (4) having an opening diameter of less than 2 micrometres are taken into account as these are considered to contribute to foaming. The foaming porosity is obtained by the ratio of the volume of pores contributing to foaming over the volume of the aggregate excluding the volume of open pores having an opening diameter above 2 micrometres. This can be measured by mercury porosimetry or X-ray tomography.

The foaming porosity of the present sintered products, similarly to the porous powders prior to sintering, is preferably at least 35%, such as at least 40% or at least 50%. Preferably, the foaming porosity is between 35 and 85%, more preferably between 40 and 80%, even more preferably between 40 and 75%, even more preferably between 45 and 70%, most preferably between 45 and 65%.

Thus, a sintered instant beverage product having a foaming porosity of at least 35%, wherein the product comprises ice sublimation voids is part of the present invention. Similarly to the porous spray-frozen powder, the sintered product preferably has an ice crystal pore volume of less than 2.5mL/g, preferably less than 2.0mL/g.

The ice sublimation voids present in the sintered product preferably have a dimension of less than 3 micrometres, preferably between 0.1 and 3 micrometres.

According to the invention, the sintered products preferably have an average closed pore diameter $D_{50}$ of less than 80 micrometres. Preferably the pores have an average diameter $D_{50}$ of less than 60 micrometres, more preferably less than 50 micrometres, even more preferably less than 40 micrometres, even more preferably less than 30 micrometres, most preferably less than 25 micrometres. The pore size distribution is based on the void space distribution.

Another characteristic of the sintered products of the invention is their open pores (3). These open pores form the channels for liquid penetration into the products of the invention. The larger the volume and size of the open pores, the higher the liquid penetration and the better the dissolution. Thus, the products of the invention may be characterised by their "open pore volume" which provides an estimation of the ability to dissolve the product of the invention. In order to measure the open pore volume per gram of product, the volume of the interstices having an opening diameter between 1 and 500 micrometres is taken into account. This can be measured by mercury porosimetry.

The present sintered products are preferably characterised by an open pore volume of less than 3mL/g. Preferably, the open pore volume is between 0.5 and 2.5mL/g, more preferably between 0.7 and 2.0mL/g.

It has also been found by the present invention that another factor influencing the dissolution and the foam volumes obtained upon reconstitution is the size distribution of the pores, i.e. of the internal voids (2) and the open pores having an opening of less than 2 micrometres (4).

The pore size distribution of the sintered products may be characterised by a distribution span factor n of preferably less than 4, more preferably less than 3, even more preferably less than 2, most preferably less than 1. The distribution span factor is obtained by X-ray tomography as described above in relation to the porous powders used in the sintering process.

The sintered coffee powder preferably has a tapped density between 100-300g/L.

The present invention also provides a cold-sintered instant coffee product comprising ice crystal sublimation voids throughout the volume of the product.

The present sintered products may be distinguished from regular freeze-dried powders by their pore diameter distribution.

A product of invention may have a pore size distribution where two peaks are apparent. The pores with sizes less than 3 micrometres are formed by ice crystal sublimation. The pores with sizes from 10 to 500 micrometres are formed during sintering process, due to interparticle packing or interparticle voids.

Most preferably, the liquid used to reconstitute the present coffee product is hot water, but it may also be milk, juice, cold water etc. depending on the desired final beverage.

**Examples**

**Example 1**

**Mercury porosimetry to evaluate foaming porosity, particle porosity and open pore volume of a sintered powder according to the present invention**

AutoPore IV 9520 is used for the structure evaluation (Micromeritics Inc. Norcrose, GA, USA). The operation pressure for Hg intrusion was from 0.4 psia to 9000 psia (with low pressure from 0.4psia to 40psia and high pressure port from 20 to 9000 pisa). The pore diameter under this pressure is ranged from 500 to 0.01 um. The data reported in this note will be pore volume (ml/g) at different pore diameter (um).

About 0.1 to 0.4 g of sample is precisely weighted and packed in a penetrometer (volume 3.5 ml, neck or capillary stem diameter 0.3 mm and stem volume of 0.5 ml).

After the penetrometer is inserted to the lower pressure port, sample is evacuated at 1.1 psia/min, then switch to a medium rate at 0.5 psia and a fast rate at 900 μm Hg. The evacuating target is 60 μm Hg. After reaching the target, the evacuation is continued for 5 min before Hg is filled in.

The measurement is conducted in set-time equilibration. That is, the pressure points at which data are to be taken and the elapsed time at that pressure in the set-time equilibration (10 sec) mode. Roughly 140 data points are collected at the pressure ranges.

The bulk volume of the granulate is obtained from the initial volume of mercury and the sample holder. The volume of the open pores with opening diameter greater than 2 micrometers (3) is obtained after intrusion with mercury up to a diameter of 2 micrometer. Subtraction of this volume from the bulk volume of the granulate gives the new volume of the granulate which comprises the closed pores (2), open pores with opening diameters less than 2 micrometers (4) and the volume of the coffee matrix. The volume of the closed pores, open pores with opening larger than 2 micrometers in the granulate is obtained by subtracting the volume of the coffee matrix from the new volume of the granulate. The volume of the coffee matrix is obtained from the weight of the sample and coffee matrix density. The foaming porosity is the ratio of the volume of closed pores and open pores having an opening diameter of less than 2 micrometer over the new volume of the granulate.

The particle porosity of the precursor powder may be measured using the method as described in US 60/976,229.

The volume of open pores per gram of product in the diameter range 1 to 500 micrometres gives the "open pore volume".

**Determination of the internal structure of coffee particles by microcomputed X-ray tomography**

X-ray tomography scans are performed with a 1172 Skyscan MCT (Antwerpen, Belgium) with a X-ray beam of 80kV and 100uA. Scans are performed with the Skyscan software (version 1.5 (build 0) A (Hamamatsu 10Mp camera), reconstruction with the Skyscan recon software (version 1.4.4) and 3D image analysis with CTAn software (version 1.7.0.3, 64-bit).

To obtain a pixel size of 1um, the camera is set up at 4000x2096 pixels and samples were placed in the Far position. Exposure time is 2356 ms. Scan is performed over 180°, the rotation step is 0.3° and the frame averaging is 4.

The reconstruction of the dataset is performed over 800 slices in average, with the settings contrast at 0-0.25. Smoothing and ring artefact reduction are set up at 1 and 10, respectively.

3D image analyses are performed on the 1 um per pixel datasets. The analysis is performed in two steps: a first step to select the region of interest in the granulate to be analysed by excluding the open pores with opening greater than 2 micrometers, the second step to obtain the distribution of the porosity in the selected region of interest. The foaming porosity value obtained by this technique matches closely that obtained by mercury porosimetry.

## Selection of volume of interest

The images of 1um per pixel resolution are segmented at 30-255, cleaned by removing any single spots smaller than 16 pixels, and then dilated by mathematical morphology (radius of 3 pixels). The selection of the volume of interest is performed through the shrink-wrap function, and then this volume is eroded by mathematical morphology (radius of 3 pixels) to adjust to the surface of the particles.

## Void space distribution in the region of interest:

The images are reloaded and segmented at 40-255. The foaming porosity is then calculated as the ratio of the volume of pores out of the volume of region of interest. The structure separation gives the pores size distribution.

The volume of open pores per gram of product in the diameter range less than 3 micrometres gives volume opened up by the ice crystal. This is referred to as the ice crystals pore volume. A preferential range between 0.1 and 3 micrometers may also be considered.

## Gas volume of powder

Gas load was measured by the following procedure:

One gram of product was sealed in a vial and 5 ml of water was added through a septum. The vial was then punctured under an inverted burette filled with water in order to determine the volume of gas that was released during dissolution.

This procedure ensured that the gas measured only came from gas entrapped above atmospheric pressure in the product. The values were then corrected to the external pressure and normalized to 1013 hPa. The standard deviation of 3 replicates of the measurement was 0.15 ml/g.

## Example 2 - production of spray frozen base powder

1. Nitrogen gas was added to coffee liquor comprised of an 65% Arabica/35% Robusta blend using extraction method A, with solids content above of 52% by the means of a sparging device distributing the nitrogen homogenously.
2. The nitrogen addition rate was 1.65 liters of nitrogen per kg of coffee solid.
3. The gas/extract mixture was passed through a high-shear mixer to ensure a homogeneous dispersion of nitrogen bubbles as well as a reduction in the bubble size.
4. The foamed extract immediately passed through a heat exchanger to cool the extract down to approximately 10°C.
5. The foamed extract then entered a high pressure pump and was compressed to 200 bar.
6. The extract was pumped to the top of the spray freezing tower.
7. The extract was atomised at 200 bar with a single fluid swirl nozzle.
8. The frozen base powder was used to produce a freeze dried product with a porous structure.
9. The dried base powder produced a crema volume of 10.3 ml with a closed porosity of 30%.
10. The dried base powder had a particle size of 91 micrometers and bulk density of 536 g/l.
11. The dried base powder had an internal gas pressure of 5.1 bar with a gas volume of 1.4 ml per gram of coffee. The volume of the closed pores within the dried base powder was 0.28 ml per gram of coffee. The average gas cell size was 8 micrometer.
12. The mercury volume < 1.5 micrometer was 0.213 ml/g.
13. The mercury total volume was 0.984 ml/g.
14. The ice crystal size ranged from 0.01 micrometer to 1.00 micrometer, with an average ice crystal size was 0.11 micrometer.

## Example 3 Production of spray frozen base powder

1. Nitrogen gas was added to coffee liquor comprised of a 65% Arabica/35% Robusta blend using extraction method B, with solids content above of 55% by the means of a sparging device distributing the nitrogen homogenously.
2. The nitrogen addition rate was 1.65 liters of nitrogen per kg of coffee solid.
3. The gas/extract mixture was passed through a high-shear mixer to ensure a homogeneous dispersion of nitrogen bubbles as well as a reduction in the bubble size.
4. The foamed extract immediately passed through a heat exchanger to cool the extract down to approximately 20°C.
5. The foamed extract then entered a high pressure pump and was compressed to 185 bar.
6. The extract was pumped to the top of the spray freezing tower.
7. The extract was atomised at 185 bar with a single fluid swirl nozzle.
8. The dried base powder produced a crema volume of 10.4 ml with a closed porosity of 36%.
9. The dried base powder had a particle size of 139 micrometers and bulk density of 521 g/l.
10. The dried base powder had an internal gas pressure of 4.3 bar with a gas volume of 1.6 ml per gram of coffee. The volume of the closed pores within the dried base powder was 0.37 ml per gram of coffee. The average gas cell size was 8 micrometer.

11. The mercury volume < 1.5 micrometer was 0.41 ml/g.

12. The mercury total volume was 1.36 ml/g.

13. The ice crystal size ranged from 0.01 micrometer to 1.00 micrometer, with an average ice crystal size was 0.16 micrometer.

**Example 4 Production of spray frozen base powder**

1. Nitrogen gas was added to coffee liquor comprised of a 65% Arabica/35% Robusta blend using extraction method B, with solids content above of 55% by the means of a sparging device distributing the nitrogen homogenously.

2. The nitrogen addition rate was 1.43 liters of nitrogen per kg of coffee solid.

3. The gas/extract mixture was passed through a high-shear mixer to ensure a homogeneous dispersion of nitrogen bubbles as well as a reduction in the bubble size.

4. The foamed extract immediately passed through a heat exchanger to cool the extract down to approximately 15°C.

5. The foamed extract then entered a high pressure pump and was compressed to 200 bar.

6. The extract was pumped to the top of the spray freezing tower.

7. The extract was atomised at 200 bar with a single fluid swirl nozzle.

8. The dried base powder produced a crema volume of 8.0 ml with a closed porosity of 33%.

9. The dried base powder had a particle size of 116 micrometers and bulk density of 559 g/l.

10. The dried base powder had an internal gas pressure of 5.1 bar with a gas volume of 1.6 ml per gram of coffee. The volume of the closed pores within the dried base powder was 0.32 ml per gram of coffee. The average gas cell size was 8 micrometer.

11. The mercury volume < 1.5 micrometer was 0.26 ml/g.

12. The mercury total volume was 1.10 ml/g.

**Example 5 Sintering**

1. A precursor was produced by spray-freezing a 65% Arabica/35% Robusta blend made from Extraction Method A at 53% solids content. (The precursor properties are described in Spray-Freezing Example 1).

2. The precursor was distributed into a cake using some form of a feeder onto a flat surface with a cake depth of 5 mm.

3. The distributed cake was transferred by means of a porous belt conveyor located in a -40C ambient environment.

4. The cake was conveyed into a heated sintering zone with air temperature of -14.5°C, with an air velocity of 2.2 m/sec for a residence time of 90 seconds.

5. After sintering, the cake was conveyed into a cooling zone, at which point the cake was hardened and removed from the belt.

6. The cake was then ground (texturized) through a grinder to form a freeze-dried looking texture, of particle size range from 0.6 to 3.2 mm.

7. All of the above steps took place in the -40C cold room environment.

8. After texturizing, the ground frozen product was freeze-dried in a batch vacuum chamber to produce the final dried product. The product was dried under vacuum at 0.1mbar, 20°C for 24 hours.

9. The final moisture content of the dried product was 2.1%.

10. The final product had the following properties:

   a. Bulk density = 219g/l
   b. Friability = 48%
   c. Crema volume = 11.0ml (by FMD method 5.0g/200ml)

11. The final product had internal structure results of the following:

   a. Closed porosity = 36%
   b. Mercury volume < 1.5 micrometer = 0.97 ml/g
   c. Mercury total volume = 1.761 ml/g
   d. Foaming porosity = 67%

12. The gas pressure within the particle structure 2.5 bar, or 0.9 ml gas per gram of coffee. The average gas cell size was 8 micrometer.

13. The ice crystal size range for this product was 0.01 to 1.00 micrometer. The average ice pore size was 0.27 micrometer.

**Example 6 Sintering**

1. A precursor was produced by spray-freezing a 65% Arabica/35% Robusta blend made from Extraction Method A at 53% solids content. (The precursor properties are described in Spray-Freezing Example 2).

2. The precursor was distributed into a cake using some form of a feeder onto a flat surface with a cake depth of 10 mm.

3. The distributed cake was transferred by means of a porous belt conveyor located in a -40C ambient environment.

4. The cake was conveyed into a heated sintering zone with air temperature of -12°C, with an air velocity of 1.7 m/sec for a residence time of 150 seconds.

5. After sintering, the cake was conveyed into a cooling zone, at which point the cake was hardened and removed from the belt.

6. The cake was then ground (texturized) through a grinder to form a freeze-dried looking texture, of particle size range from 0.6 to 3.2 mm.

7. All of the above steps took place in the -40C cold room environment.

8. After texturizing, the ground frozen product was freeze-dried in a batch vacuum chamber to produce the final dried product. The product was dried under vacuum at 0.1mbar, 20°C for 24 hours.

9. The final moisture content of the dried product was 1.0%.

10. The final product had the following properties:

    a. Bulk density = 244g/l
    b. Friability = 12%
    c. Crema volume = 10.1ml (by FMD method 5.0g/200ml)

11. The final product had internal structure results of the following:

    d. Closed porosity = 30%
    e. Mercury volume < 1.5 micrometer = 0.94 ml/g
    f. Mercury total volume = 1.58 ml/g
    g. Foaming porosity = 65%

12. The ice crystal size range for this product was 0.02 to 1.00 micrometer. The average ice pore size was 0.45 micrometer.

**Claims**

1. Method for the preparation of an instant coffee powder comprising the steps of:

    a. Providing a porous spray-frozen powder having a particle porosity of at least 35%, an ice crystal pore volume of less than 2.5mL/g, and an ice crystal pore size of less than 3 micrometres;
    b. Sintering a layer of the porous spray frozen powder at a temperature below 0°C while gas is forced through the layer, to form a sintered cake
    c. Freeze-drying the sintered powder to provide said instant beverage product.

2. Method according to claim 1, wherein the instant coffee product is grinded after sintering to produce an instant beverage powder.

3. Method according to claim 2, wherein the instant coffee powder is in the form of granules.

4. Method according to any of the preceding claims, wherein gas is forced through the layer at a gas velocity of at least 0.01 m/s.

5. Method according to any of the preceding claims, wherein the porous spray-frozen powder comprises gas under pressure.

6. Method according to claim 5 wherein the porous spray-frozen powder comprises gas under a pressure of at least 2 bars.

7. Method according to claim 5 wherein the porous spray-frozen powder comprises at least 1 ml enclosed gas per g of powder.

8. Method according to any of the preceding claims, wherein the porous spray-frozen powder is maintained at a temperature of below 0°C prior to sintering.

9. Method according to any of the preceding claims, wherein the sintering is carried out on a porous conveyer belt carrying the layer of base powder.

10. Method according to any of the preceding claims, wherein the temperature of the gas being forced through the layer is between -5°C and -25°C.

11. Method according to any of the preceding claims, wherein the moisture content of the instant beverage product after freeze-drying is 0.5-5%.

**Patentansprüche**

1. Verfahren zur Zubereitung eines Instantkaffeepulvers mit den folgenden Schritten:

    a. Bereitstellen eines porösen, sprühgefriergetrockneten Pulvers mit einer Teilchenporosität von mindestens 35%, einem Eiskristall-Porenvolumen von weniger als 2,5 ml/g und einer Eiskristall-Porengröße von weniger als 3 Mikrometern;
    b. Sintern einer Schicht des porösen sprühgefriergetrockneten Pulvers bei einer Temperatur unter 0°C, während Gas durch die Schicht gepresst wird, um einen Sinterkuchen herzustellen;
    c. Gefriertrocknen des gesinterten Pulvers zur Bereitstellung des Instantgetränkeproduktes.

2. Verfahren nach Anspruch 1, wobei das Instantkaffeeprodukt nach dem Sintern gemahlen wird, um ein Instantgetränkepulver herzustellen.

3. Verfahren nach Anspruch 2, wobei das Instantkaffeepulver in Form von Granulat vorliegt.

4. Verfahren nach einem der vorhergehenden Ansprüche, wobei Gas mit einer Gasgeschwindigkeit von mindestens 0,01 m/s durch die Schicht gepresst wird.

5. Verfahren nach einem der vorhergehenden Ansprüche, wobei das poröse sprühgefriergetrocknete Pulver Gas unter Druck enthält.

6. Verfahren nach Anspruch 5, wobei das poröse, sprühgefriergetrocknete Pulver Gas unter einem Druck von mindestens 2 Bar enthält.

7. Verfahren nach Anspruch 5, wobei das poröse, sprühgefriergetrocknete Pulver mindestens 1 ml eingeschlossenes Gas pro g Pulver enthält.

8. Verfahren nach einem der vorhergehenden Ansprüche, wobei das poröse, sprühgefriergetrocknete Pulver vor dem Sintern auf einer Temperatur unter 0°C gehalten wird.

9. Verfahren nach einem der vorhergehenden Ansprüche, wobei das Sintern auf einem porösen Förderband durchgeführt wird, das die Grundpulverschicht trägt.

10. Verfahren nach einem der vorhergehenden Ansprüche, wobei die Temperatur des Gases, das durch die Schicht gepresst wird, zwischen -5°C und -25°C liegt.

11. Verfahren nach einem der vorhergehenden Ansprüche, wobei der Feuchtigkeitsgehalt des Instantgetränkeproduktes nach dem Gefriertrocknen bei 0,5 bis 5% liegt.

**Revendications**

1. Procédé pour la préparation d'une poudre de café instantané soluble comprenant les étapes consistant à :

> a. fournir une poudre poreuse congelée par pulvérisation présentant une porosité de particules d'au moins 35%, un volume de pores de cristal de glace de moins de 2,5 mL/g, et une taille de pores de cristal de glace de moins de 3 micromètres ;
> b. fritter une couche de la poudre poreuse congelée par pulvérisation à une température inférieure à 0 °C tandis que du gaz est forcé à travers la couche, afin de former un gâteau fritté ;
> c. lyophiliser la poudre frittée afin de fournir ledit produit de boisson instantanée.

2. Procédé selon la revendication 1, dans lequel le produit de café instantané est moulu après frittage afin de produire une poudre de boisson instantanée.

3. Procédé selon la revendication 2, dans lequel la poudre de café instantané est sous forme de granulés.

4. Procédé selon l'une quelconque des revendications précédentes, dans lequel du gaz est forcé à travers la couche à une vitesse de gaz d'au moins 0,01 m/s.

5. Procédé selon l'une quelconque des revendications précédentes, dans lequel la poudre poreuse congelée par pulvérisation comprend du gaz sous pression.

6. Procédé selon la revendication 5, dans lequel la poudre poreuse congelée par pulvérisation comprend du gaz sous une pression d'au moins 2 bars.

7. Procédé selon la revendication 5, dans lequel la poudre poreuse congelée par pulvérisation comprend au moins 1 ml de gaz enfermé par g de poudre.

8. Procédé selon l'une quelconque des revendications précédentes, dans lequel la poudre poreuse congelée par pulvérisation est maintenue à une température inférieure à 0 °C avant le frittage.

9. Procédé selon l'une quelconque des revendications précédentes, dans lequel le frittage est effectué sur une bande transporteuse poreuse portant la couche de poudre de base.

10. Procédé selon l'une quelconque des revendications précédentes, dans lequel la température du gaz qui est forcé à travers la couche est comprise entre -5 °C et -25 °C.

11. Procédé selon l'une quelconque des revendications précédentes, dans lequel la teneur en humidité du produit de boisson instantanée après la lyophilisation est de 0,5-5%.

Fig. 1

Fig. 2

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6713113 A
- US 4830869 A
- US 4903585 A
- US 4618500 A, Forquer
- US 3749378 A, Rhodes
- EP 0839457 B1, Kraft Foods
- EP 1627568 A
- US 6497911 A, Niro

- US 5089279 A, Conopco
- US 4394395 A, Nestlé
- US 3592659 A
- US 3573060 A, Hills Bros
- DE 19750679, Windhab
- US 3670520 A, Bonteil
- WO 2005105253 A
- US 60976229 B